# EUROPÄISCHE PATENTSCHRIFT

(11) **EP 2 222 969 B1**
(45) Veröffentlichungstag und Bekanntmachung des Hinweises auf die Patenterteilung: **25.05.2011**
(21) Anmeldenummer: 08865040.3
(22) Anmeldetag: 17.12.2008
(51) Int. Cl.: F16B 5/06, H01R 13/73

(54) **STECKHALTERUNG**
PLUG-TYPE MOUNT
FIXATION ENFICHABLE

(30) Priorität: 21.12.2007 DE 102007061926; 22.07.2008 DE 102008034131
(43) Veröffentlichungstag der Anmeldung: 01.09.2010
(73) Patentinhaber: SFS intec Holding AG, 9435 Heerbrugg (CH)
(72) Erfinder: COSTABEL, Sascha, 75443 Ötisheim (DE); SCHMIDT, Markus, 75391 Gechingen (DE)
(86) Internationale Anmeldenummer: PCT/EP2008/067706
(87) Internationale Veröffentlichungsnummer: WO 2009/080643

(56) Entgegenhaltungen:
- DE-U1- 29 920 497
- DE-U1-202004 018 340
- DE-U1-202006 004 081
- US-A- 3 182 367
- US-A- 5 382 179
- US-A1- 2003 087 550
- US-B1- 7 278 869

## Beschreibung

### Technisches Gebiet

Die Erfindung betrifft eine Steckhalterung zum lösbaren Haltern eines Ausstattungsteils wie einem Panel oder einer Innenverkleidung an einem Unterbau wie einem Flugzeugrumpf, mit einem Haltebolzen, der an einem Ende eine Nut zum Arretieren des Haltebolzens und am anderen Ende ein elastisch nachgiebiges, scheibenförmiges Dämpfungselement zur Schwingungsdämpfung und zur Montage des Haltebolzens aufweist, das auf dem Haltebolzen zwischen einer Haltescheibe und einer axial verschiebbaren Gleitscheibe angeordnet ist, und mit einem Gehäuse, in welchem ein federvorgespannter Schieber gelagert ist, der durch Einführen des Haltebolzens in eine Öffnung des Gehäuses gegen die Federvorspannung verschiebbar und anschließend durch die Federvorspannung in die Nut des Haltebolzens einrastbar ist, wobei von dem Dämpfungselement und dem Gehäuse eines an dem Ausstattungsteil und das andere an dem Unterbau montierbar ist.

### Stand der Technik

Eine solche Steckhalterung bildet den Gegenstand der früheren, nicht vorveröffentlichten deutschen Patentanmeldung Nr. 10 2007 061 926.1 (im Folgenden als die frühere Patentanmeldung bezeichnet) der Anmelderin.

Bei der Kabinenentwicklung von neueren Flugzeugtypen wie zum Beispiel dem Airbus A350 wird angestrebt, an dem Flugzeugrumpf zu befestigende Elemente wie Toiletten, Bordküchen, Fluggastsitze, Kabinennetzwerke, Kabinenbeleuchtung und Luftdüsen jeweils als ein komplettes Kabinenmodul zu konzipieren, wobei aber alle Verbindungsstellen als flexible standardisierte Schnittstellen ausgebildet sein sollen und wobei vereinfachte Befestigungskonzepte zum Einsatz kommen sollen, die eine Montage und Demontage ohne die Verwendung von Werkzeugen ermöglichen (vgl. den Aufsatz "Kabinenentwicklung - Neuer Ansatz für die A350 - Cabin Customisation", Zeitschrift One, deutsche Ausgabe, 18. Dezember 2006, Seite 23). Außerdem soll es möglich sein, eine bestehende konfigurierte Lösung, zum Beispiel die Kabinenausstattung für einen Langstreckenflug, kurzfristig umkonfigurieren zu können, zum Beispiel die Kabinenausstattung für einen Kurzstreckenflug herrichten zu können. Die standardisierten Schnittstellen sollen dabei bei allen Flugzeugkategorien gleichermaßen anwendbar sein. Weiter soll dabei gewährleistet sein, dass die standardisierten Schnittstellen Klappergeräusche der miteinander verbundenen Bauteile sicher verhindern.

Gegenstand der früheren Patentanmeldung sind ein Stecker, ein Halter und eine Steckhalterung als Kombination eines solchen Steckers und Halters, die zum Beispiel aus der Gebrauchsmusterschrift DE 299 20 497 U1 (dem Oberbegriff entsprechend) bekannt sind und so verbessert werden sollen, dass sich mit ihnen wenigstens die vorgenannten Probleme lösen lassen. Die mit der Steckhalterung nach der früheren Patentanmeldung erzielte Verbindung lässt sich nämlich einfacher herstellen und lösen, weil eine genaue gegenseitige Ausrichtung der beiden miteinander zu verbindenden Bauteile bei der Montage nicht erforderlich ist. Darüber hinaus ist weder für die Montage noch für die Demontage ein Werkzeug erforderlich, denn das Herstellen der Verbindung erfolgt einfach durch Einstecken nach dem Prinzip "Plug and Play" oder "Snap and Click". Das Lösen der Verbindung kann beispielsweise mit einem Exzenterhebel erfolgen, der gegen den federvorgespannten Schieber drückt, oder einfach dadurch, dass mit einem Finger gegen eine besondere Handhabe gedrückt wird, um den Schieber gegen die Federvorspannung soweit zurückzuschieben, bis er den Haltebolzen freigibt.

Wenn in einem Flugzeug ein Panel, das Teile der elektrischen Ausrüstung tragen kann, aus der Decke oder der Innenwand wie eine Klappe herausgeschwenkt wird, müssen die Kabel, die mit den Ausrüstungsteilen an dem Panel verbunden sind, den Weg des Panels mitmachen. Damit die Kabel die Bewegung des Panels nicht behindern, müssen die an das Panel angeschlossenen Kabel eine gewisse Überlänge aufweisen. In einem Flugzeug, wo die Länge der eingebauten Kabel viele Kilometer misst, führt die vorgenannte Überkabellänge zu einem unerwünschten zusätzlichen Gewicht, das in der Größenordnung von mehreren hundert Kilogramm liegen kann. Wenn ein Panel von der Decke oder der Innenverkleidung zu lösen ist, ist es darüber hinaus erforderlich, elektrische Steckverbindungen zu trennen, die später bei dem Wiedereinbau des Panels wieder von Hand zusammengesteckt werden müssen. Die Steckhalterung nach der früheren Patentanmeldung ist zwar wie angestrebt als eine flexible standardisierte Schnittstelle ausgebildet, die eine Montage und Demontage eines Panels od. dgl. ohne die Verwendung von Werkzeugen ermöglicht, sie ist jedoch nicht dafür ausgebildet, die Überkabellänge und die damit verbundenen Probleme zu vermeiden.

### Darstellung der Erfindung

Aufgabe der Erfindung ist es, eine Steckhalterung der eingangs genannten Art so weiterzubilden, dass die o.g. Probleme, insbesondere die Überkabellänge und die dadurch verursachten Probleme vermieden werden.

Diese Aufgabe ist dadurch gelöst, dass bei einer Steckhalterung der eingangs genannten Art an dem Gehäuse ein erster Halter angebracht ist und die Gleitscheibe als ein Teil eines zweiten Halters ausgebildet ist, wobei die Halter jeweils mindestens einen elektrischen Kontakt tragen und so ausgebildet sind, dass bei in dem Gehäuse arretiertem Haltebolzen die Halter aneinander befestigt und die elektrischen Kontakte elektrisch verbunden sind.

Die vorgenannten Probleme einer Steckhalterung als Kombination eines Steckers und einen Halters, wie aus der e.g., gattungsbildenden DE 299 20 497 U1 bekannt, werden durch die kennzeichnenden Merkmale des Anspruchs 1 gelöst.

Im Gegensatz zu der mechanischen Steckhalterung nach der früheren Patentanmeldung ist die erfindungsgemäße Steckhalterung eine elektromechanische Steckhalterung, die erlaubt, gleichzeitig mit dem Montieren oder Demontieren eines Ausstattungsteils wie einem Panel an einem Unterbau eine elektrische Verbindung herzustellen oder zu trennen. Es ist lediglich erforderlich, zwei Kabel mit den erfindungsgemäß vorgesehenen elektrischen Kontakten der beiden Halter zu verbinden. Die elektrische Verbindung der elektrischen Kontakte wird mit dem Einführen des Haltebolzens in das Gehäuse an dem ersten Halter hergestellt und mit dem Herausziehen des Haltebolzens aus dem Gehäuse getrennt. Die elektrische Verbindung der Kabel mit den elektrischen Kontakten braucht bei der Montage und Demontage eines Panels nicht getrennt zu werden, braucht also auch nicht für ein Trennen von Hand zugänglich zu sein. Die Kabel benötigen daher nur ihre Minimallänge, d.h. keinerlei Überlange. Bislang musste ein Panel nämlich wenigstens soweit geöffnet werden können, dass eine elektrische Kabelsteckverbindung zugänglich wird, damit sie von Hand getrennt werden kann. Dieser Trennvorgang (und analog der Verbindungsherstellvorgang) findet bei der elektromechanischen Steckhalterung nach der Erfindung nur noch zwischen den elektrischen Kontakten der beiden Halter und zudem bereits in dem Augenblick statt, in welchem die mechanische Verbindung zwischen Haltebolzen und erstem Halter getrennt (bzw. hergestellt) wird. Die Überkabellängen entfallen, weil nach dem Trennen von erstem Halter und Haltebolzen nicht noch zusätzlich eine elektrische Verbindung besteht, die soweit zugänglich gemacht werden müsste, dass sie mit der Hand erreichbar ist, um getrennt werden zu können. Während es im Stand der Technik erforderlich ist, zunächst eine mechanische Verbindung und anschließend auch noch eine elektrische Kabelverbindung herzustellen oder zu trennen, was besondere Steckverbindungen und zusätzliche Kabellängen nötig macht, erfolgt bei der Steckhalterung nach der Erfindung das mechanische und elektrische Verbinden/Trennen zwischen den Haltern einerseits und deren elektrischen Kontakten andererseits in einem einzigen Arbeitsgang.

Vorteilhafte Ausgestaltungen der Erfindung bilden die Gegenstände der Unteransprüche.

In einer Ausgestaltung der Steckhalterung nach der Erfindung trägt zum Herstellen der elektrischen Verbindung zwischen den elektrischen Kontakten wenigstens einer der Halter mindestens einen Verbindungskontakt. Der Verbindungskontakt erleichtert das Herstellen der elektrischen Verbindung und vereinfacht den Aufbau der elektromechanischen Steckhalterung nach der Erfindung. Überdies erleichtert das die Montage der elektromechanischen Steckhalterung nach der Erfindung, denn der Verbindungskontakt wird sich so immer an der richtigen Stelle befinden, um den elektrischen Kontakt an dem anderen Halter aufnehmen oder kontaktieren zu können.

In einer weiteren Ausgestaltung der Steckhalterung nach der Erfindung sind die elektrischen Kontakte an jedem Halter jeweils in einem Kontaktgehäuse aufgenommen und mit einem Eingangs- oder Ausgangskabel verbunden. Die Verwendung der Kontaktgehäuse führt zu einer weiteren Vereinfachung des Aufbaus der elektromechanischen Steckhalterung nach der Erfindung und der Kabelanschlüsse.

In einer weiteren Ausgestaltung der Steckhalterung nach der Erfindung sind einer der beiden elektrischen Kontakte und der Verbindungskontakt einstückig hergestellt. Dadurch wird das Herstellen der elektrischen Verbindung zwischen den elektrischen Kontakten noch sicherer und dabei noch einfacher gemacht.

In einer weiteren Ausgestaltung der Steckhalterung nach der Erfindung weist die Nut des Haltebolzens zwei radial ausgebildete Nutseitenwände auf. Das ermöglicht, die zwischen dem Haltebolzen und dem federvorgespannten Schieber hergestellte Verbindung dauerhaft aufrechterhalten zu können, solange der Schieber nicht entgegen der Richtung der Federvorspannung betätigt wird. Wenn sich die Nut nicht über den vollen Umfang des Haltebolzens erstreckt, kann das Trennen der Verbindung einfach durch Drehen des Haltebolzens erfolgen, der aus dem Gehäuse herausgezogen werden kann, sobald der Schieber die Nut verlassen hat.

In einer weiteren Ausgestaltung der Steckhalterung nach der Erfindung ist der erste Halter mittels einer Schiebeverbindung auf dem Gehäuse angebracht. Aufgrund der Schiebeverbindung lässt sich die Verbindung zwischen dem Gehäuse und dem ersten Halter auf einfache Weise herstellen und trennen.

In einer weiteren Ausgestaltung der Steckhalterung nach der Erfindung hat der erste Halter eine Bohrung, die mit der Öffnung des Gehäuses fluchtet. Die Öffnung des Gehäuses kann deshalb so dimensioniert werden, dass eine genaue gegenseitige Ausrichtung der Bohrung und der Öffnung des Haltebolzens und des ersten Halters bei der Montage nicht erforderlich ist.

In einer weiteren Ausgestaltung der Steckhalterung nach der Erfindung ist die Haltescheibe des zweiten Halters auf dem Haltebolzen an einem Anschlag abstützbar oder abgestützt und ist der Gleitscheibenteil des zweiten Halters auf dem Haltebolzen an einer an dem Haltebolzen angeformten Schulter abstützbar oder abgestützt. Deshalb lässt sich das Dämpfungselement auf einfache Weise auf dem Haltebolzen montieren.

In einer weiteren Ausgestaltung der Steckhalterung nach der Erfindung ist die Haltescheibe ein sich auf dem Dämpfungselement abstützender Blattfederring mit nach innen vorstehenden Blattfederarmen und der Anschlag ist eine Ringnut, in der sich die Blattfederarme mit ihren freien Enden abstützen. Das erleichtert die Montage des Dämpfungselements auf dem ihr zugeordneten Ende des Haltebolzens, wobei zuvor das Dämpfungselement an einem Ausstattungsteil oder dem Unterbau befestigt wird.

In einer weiteren Ausgestaltung der Steckhalterung nach der Erfindung ist der Gleitscheibenteil an dem zweiten Halter angeformt. Der zweite Halter und der Gleitscheibenteil, der die Funktion der ursprünglich separaten Gleitscheibe übernimmt, sind somit einstückig ausgebildet. Aufgrund dieser einstückigen Ausbildung lässt sich der zweite Halter auf einfache Weise herstellen, zum Beispiel aus Kunststoff als ein Spritzgussteil in einem Arbeitsgang. Entsprechendes gilt für den ersten Halter und wenigstens den oberen Teil des mit ihm verbundenen Gehäuses. Da ein solches Gehäuse bereits vorhanden ist, ist die in der oben erwähnten Ausgestaltung vorhandene Schiebeverbindung zwischen dem Gehäuse und dem ersten Halter die zweckmäßigste Methode, diese miteinander zu verbinden. Andernfalls könnte der erste Halter auch in einem Arbeitsgang zumindest mit dem oberen Teil des Gehäuses hergestellt werden.

In einer weiteren Ausgestaltung der Steckhalterung nach der Erfindung ist an dem Gleitscheibenteil des zweiten Halters auf der von der Schulter abgewandten Seite um eine den Haltebolzen aufnehmende Bohrung eine Lagerbuchse angeformt, mit der der zweite Halter auf dem Haltebolzen axial verschiebbar gelagert ist und um die sich das Dämpfungselement auf dem zweiten Halter abstützt. Diese Ausgestaltung verbessert die Lagerung des zweiten Halters auf dem Haltebolzen, ohne die einfache Herstellbarkeit des einstückigen zweiten Halters zu beeinträchtigen, denn die Lagerbuchse ist nur ein zusätzlich an dem zweiten Halter angeformter Teil.

In einer weiteren Ausgestaltung der Steckhalterung nach der Erfindung ist der axiale Abstand zwischen der Schulter und der Haltescheibe so gewählt, dass das Dämpfungselement durch die Haltescheibe gegen den zweiten Halter gedrückt ist. Das gewährleistet, dass im Schließzustand der Steckhalterung das Dämpfungselement axial etwas zusammengedrückt ist, so dass sich auf einfache Weise ein wählbarer Druck über lange Zeit in der Verbindung zwischen dem Haltebolzen und dem zweiten Halter aufrechterhalten lässt. Dadurch wird Spiel und werden somit Klappergeräusche mit Sicherheit vermieden.

In einer weiteren Ausgestaltung der Steckhalterung nach der Erfindung verjüngt sich der Haltebolzen auf der von der Haltescheibe abgewandten Seite von der Schulter aus innerhalb der Dicke des ersten Halters konisch und ist in einer entsprechend konischen Bohrung des ersten Halters spielfrei aufnehmbar oder aufgenommen. So lässt sich auf einfache Weise der Haltebolzen in der Bohrung des ersten Halters sicher und spielfrei festhalten.

In einer weiteren Ausgestaltung der Steckhalterung nach der Erfindung ist die Öffnung in dem Gehäuse eine Bohrung oder ein Langloch. Speziell in dem Fall, in welchem die Öffnung ein Langloch ist, lässt sich der Haltebolzen in das Gehäuse einführen, ohne dass die Bohrung in dem ersten Halter und die Öffnung in dem Gehäuse genau fluchten müssen.

In einer weiteren Ausgestaltung der Steckhalterung nach der Erfindung dient ein Exzenterhebel zum Entriegeln des Haltebolzens durch Verlagern des Schiebers entgegen der Federvorspannung. Mit Hilfe des Exzenterhebels lässt sich eine definierte Entriegelungsstellung des federvorbelasteten Schiebers gewährleisten. Außerdem lässt sich mit Hilfe des Exzenterhebels die Steckhalterung mühelos lösen.

In einer weiteren Ausgestaltung der Steckhalterung nach der Erfindung sind Mittel zum Befestigen des Gehäuses an dem Ausstattungsteil oder Unterbau vorgesehen. Wenn das Gehäuse an dem Ausstattungsteil oder Unterbau befestigt ist, lässt sich bei Bedarf auf einfache Weise der erste Halter gegen einen anderen Halter austauschen, zum Beispiel mit anderer Geometrie der elektrischen Kontakte.

In einer weiteren Ausgestaltung der Steckhalterung nach der Erfindung ist eine an dem Dämpfungselement angebrachte Verbindungshilfe zum Befestigen des zweiten Halters an dem Ausstattungsteil oder Unterbau vorhanden. Durch eine solche Verbindungshilfe lässt sich der zweite Halter auf einfache Weise an einem Ausstattungsteil oder am Unterbau befestigen und bei Bedarf wieder davon trennen.

In einer weiteren Ausgestaltung der Erfindung sind die elektrischen Kontakte als Federkontakte, Steckkontakte od. dgl. Kontakte ausgebildet. Das ermöglicht die Wahl der für jeden Einsatzzweck geeigneten elektrischen Kontakte.

Ausführungsbeispiele der Steckhalterung nach der Erfindung und Ausführungsbeispiele der Steckhalterung nach der früheren Patentanmeldung werden im Folgenden unter Bezugnahme auf die Zeichnungen näher beschrieben.

### Kurze Beschreibung der Zeichnungen

Es zeigt
- Fig. 1: in einer Längsschnittansicht eine erste, bevorzugte Ausführungsform einer Steckhalterung nach der Erfindung in einem Zustand, in welchem eine mechanische und eine elektrische Verbindung zwischen zwei Hal- tern für elektrische Kontakte hergestellt und arretiert ist,
- Fig. 2: in einer auseinander gezogenen Darstellung die Steckhalterung nach Fig. 1 in einem Zustand, in welchem die mechanische und die elektri- sche Verbindung getrennt sind,
- Fig. 3: in einer perspektivischen Darstellung die Steckhalterung nach der Erfin- dung in dem in Fig. 1 gezeigten Verbindungszustand,
- Fig. 4: eine weitere Ausführungsform der Steckhalterung nach der Erfindung in einem Zustand wie in Fig. 2, bei der aber die mechanisch zu verbinden- den Teile und die elektrisch zu verbindenden Teile übereinander ange- ordnet sind,
- Fig. 5: in einer auseinandergezogenen isometrischen Darstellung eine Aus- führungsform des Steckers nach der früheren Patentanmeldung,
- Fig. 6: in einer auseinandergezogenen isometrischen Darstellung eine Aus- führungsform des Halters nach der früheren Patentanmeldung,
- Fig. 7: in einer Seitenansicht ein Ausführungsbeispiel der Steckhalterung nach der Erfindung im Verriegelungszustand,
- Fig. 8: eine Schnittansicht nach der Linie VIII-VIII in Fig. 7,
- Fig. 9: eine Schnittansicht nach der Linie IX-IX in Fig. 8,
- Fig. 10: eine Darstellung der Steckhalterung wie in Fig. 7, jedoch im Entriege- lungszustand,
- Fig. 11: eine Schnittansicht nach der Linie XI-XI in Fig. 10,
- Fig. 12: eine Schnittansicht nach der Linie XII-XII in Fig. 11,
- Fig. 13: eine Darstellung der Steckhalterung wie in Fig. 7, jedoch im Ruhezu- stand ohne Eingriff des Haltebolzens in den Halter,
- Fig. 14: eine Schnittansicht nach der Linie XIV-XIV in Fig. 13 und
- Fig. 15: eine Schnittansicht nach der Linie XV-XV in Fig. 14.

### Ausführliche Beschreibung von Ausführungsformen der Erfindung

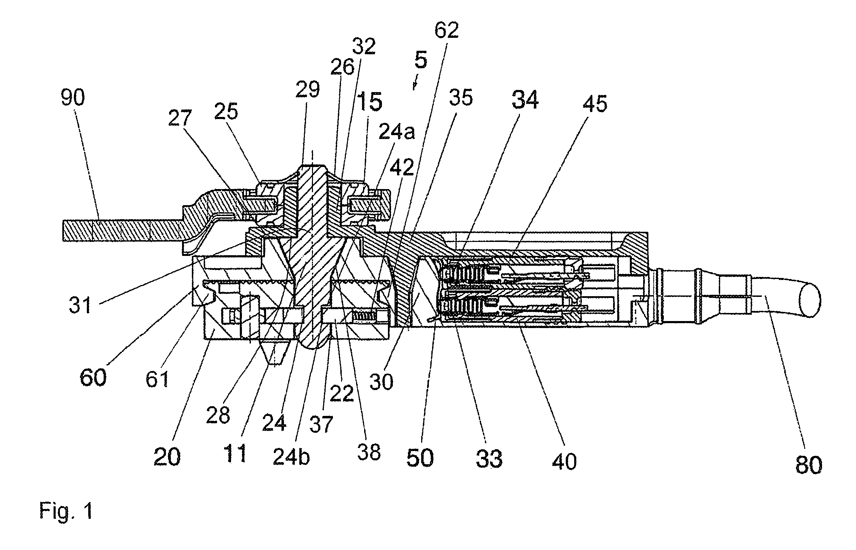

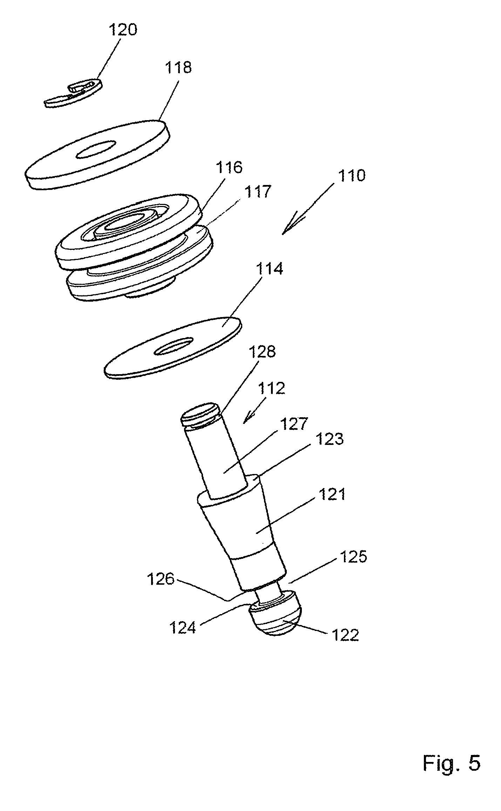

Zum besseren Verständnis der Erfindung werden zunächst Ausführungsbeispiele des Steckers, des Halters und der Steckhalterung nach der früheren Patentanmeldung der Anmelderin unter Bezugnahme auf die beigefügten Fig. 5-15 näher beschrieben. Daran schließt sich dann eine ausführliche Beschreibung von Ausführungsbeispielen der Steckhalterung nach der Erfindung anhand der Fig. 1 - 4 an.

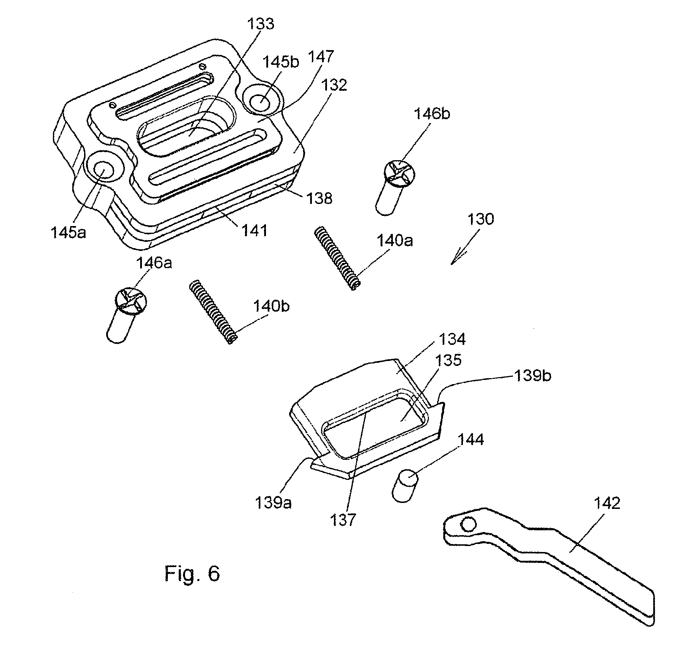

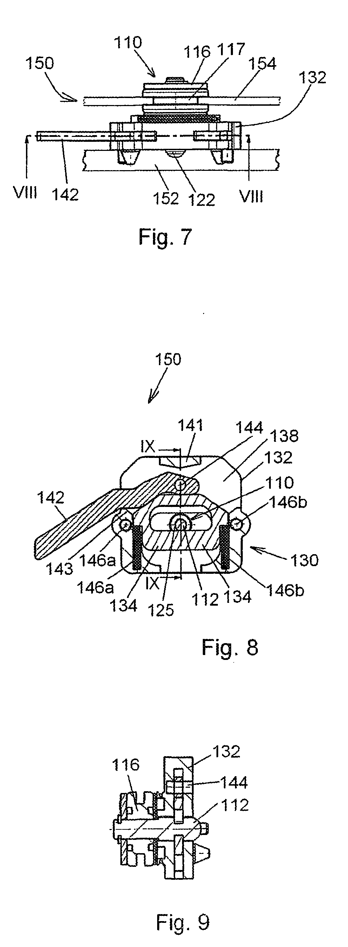

Eine Ausführungsform einer insgesamt mit 150 bezeichneten Steckhalterung nach der früheren Patentanmeldung ist in den Fig. 7 - 15 in Ver- und Entriegelungsstellungen in verschiedenen Ansichten gezeigt, auf die weiter unten noch näher eingegangen wird. Die Steckhalterung 150 dient zum lösbaren Haltern eines Ausstattungsteils 152 an einem Unterbau 154. Das Ausstattungsteil 152 kann z.B. die Innenverkleidung der Kabine eines Flugzeuges sein. Der Unterbau 154 kann beispielsweise der Flugzeugrumpf sein. Ebenso könnte es sich um entsprechende Teile eines Kraftfahrzeuges handeln. Die Steckhalterung 150 besteht aus einem insgesamt mit 110 bezeichneten und in Fig. 5 im einzelnen dargestellten Stecker und aus einem insgesamt mit 130 bezeichneten und in Fig. 6 im Einzelnen dargestellten Halter, die nun zunächst im Einzelnen beschrieben werden.

Fig. 5 zeigt ein Ausführungsbeispiel des Steckers 110 nach der früheren Patentanmeldung in einer auseinandergezogenen isometrischen Darstellung. Der Stecker 110 umfasst einen Haltebolzen 112, eine Gleitscheibe 114, ein scheibenförmiges Dämpfungselement 116, eine Haltescheibe 118 und einen Feder- oder Seegerring 120. Das Dämpfungselement besteht aus einem elastisch nachgiebigen Material, z.B. einem Elastomer. Es dient zur Schwingungsdämpfung und zur Montage des Steckers 110 an dem Unterbau 154. Ein Ende des Haltebolzens 112 ist als eine kugelig abgerundete Kuppe 122 ausgebildet. Benachbart zu der Kuppe 122 hat der Haltebolzen 112 eine Ausnehmung, die eine Ringnut 125 mit zwei radial ausgebildeten Nutseitenwänden 124 und 126 ist. Anschließend hat der Haltebolzen 112 einen sich konisch erweiternden Schaftabschnitt 121, so dass an dem Haltebolzen 112 eine Schulter 123 angeformt ist. Auf die konische Ausbildung des Schaftabschnittes 121 kommt es hierbei aber nicht an. Dieser Schaftabschnitt 121 kann auch einfach zylindrisch ausgebildet, im Durchmesser aber gegenüber dem Schaftabschnitt 127 vergrößert sein, wie es in den Fig. 7 - 15 dargestellt ist. Auf der Schulter 123 stützt sich die Gleitscheibe 114 ab. Die Haltescheibe 118 stützt sich einerseits an dem Federring 120 und andererseits an dem Dämpfungselement 116 ab. Das Dämpfungselement 116 stützt sich seinerseits an seiner Unterseite auf der Gleitscheibe 114 ab. Wenn das Dämpfungselement 116, die Gleitscheibe 114, die Haltescheibe 118 und der Federring 120 auf dem Haltebolzen 112 montiert sind, stützt sich die Gleitscheibe 114 auf der Schulter 123 ab und alle vorgenannten Teile sind in gegenseitiger Anlage. Wenn auf das in Fig. 5 obere Ende des Haltebolzens 112 Druck ausgeübt wird, während sich der Stecker 110 mit der Gleitscheibe 114 auf dem Halter 130 abstützt, bewegt sich in dem Maße, wie das elastisch nachgiebige Dämpfungselement 116 zusammengedrückt wird, die Gleitscheibe 114 auf einem mit kleinerem Durchmesser als der Schaftabschnitt 121 versehenen Schaftabschnitt 127 axial nach oben in Richtung zu dem Federring 120, der dabei einen Anschlag für die Haltescheibe 118 bildet und deren Aufwärtsbewegung verhindert. Zur Demontage der auf dem Schaft-abschnitt 127 angeordneten Teile ist der Federring 120 lösbar, indem er aus einer Nut 128 am Ende des Schaftabschnittes 127 herauszogen wird. Die Ringnut 125 des Haltebolzens 112 ist zur Montage des Steckers 110 in dem Halter 130 mit einem Clip in Eingriff bringbar, was nun unter Bezugnahme auf Fig. 6 näher beschrieben wird.

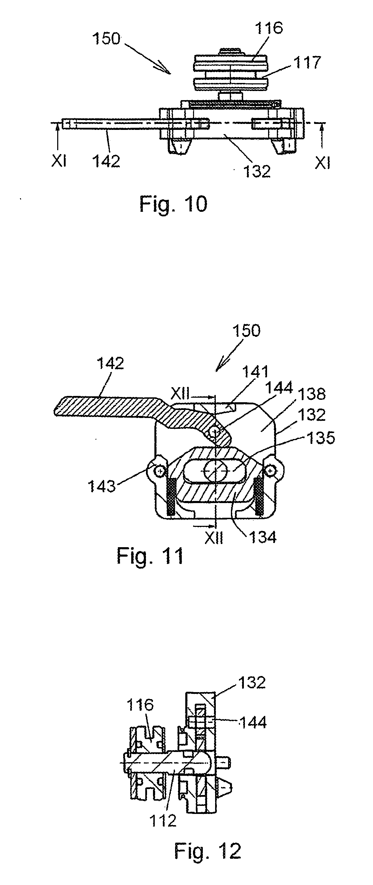

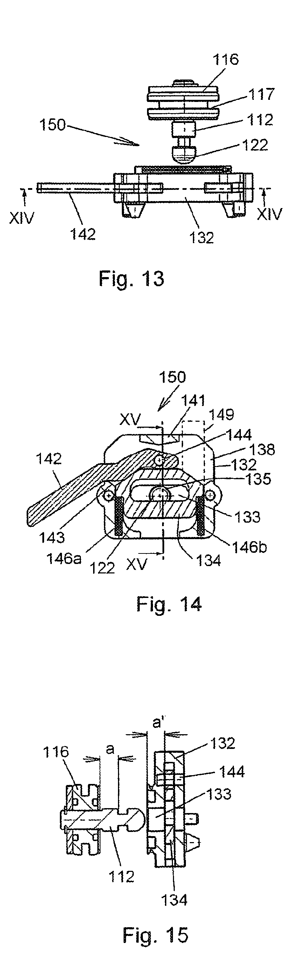

Fig. 6 zeigt in einer auseinandergezogenen isometrischen Darstellung eine Ausführungsform des Halters 130 nach der früheren Patentanmeldung. Der Halter 130 hat ein Gehäuse 132, in welchem als der oben genannte Clip ein federvorgespannter Schieber 134 gelagert ist. Das Gehäuse 132 hat eine zentrische Öffnung 133, die in dem dargestellten Ausführungsbeispiel als ein Langloch ausgebildet ist. Die Öffnung 133 könnte auch einfach als eine Bohrung ausgebildet sein. Die Öffnung 133 durchdringt das Gehäuse 132 vollständig, was in Fig. 6 ohne weiteres zu erkennen ist. In einer zur Seite hin offenen Ausnehmung 138 des Gehäuses 132 ist der Schieber 134 gelagert. Der Schieber 134 hat eine mit der Öffnung 133 des Gehäuses 132 in Deckung bringbare Öffnung 135. An den Seiten hat der Schieber 134 zwei Schultern 139a, 139b, mit denen er sich auf zwei in der Ausnehmung 138 des Gehäuses 132 angeordneten Schraubendruckfedern 140a bzw. 140b abstützt, wie es am besten in den Fig. 8, 11 und 14 zu erkennen ist, auf die weiter unten noch näher eingegangen wird. Die Öffnung 135 des Schiebers 134 hat einen mit der Ringnut 125 des Haltebolzens 112 in Eingriff bringbaren Rand 137. Der Rand 137 ist durch die Vorspannung der Schraubendruckfedern 140a, 140b ständig in Richtung auf eine Gehäuseseitenöffnung der Ausnehmung 138 hin vorgespannt. In der Gehäuseseitenöffnung der Ausnehmung 138 befindet sich ein Anschlag 141 für einen Exzenterhebel 142 zum Entriegeln des Halters 130 durch Verlagern des Schiebers 134 entgegen der durch die Schraubendruckfedern 140a, 140b ausgeübten Federvorspannung. Der Exzenterhebel 142 wirkt mit dem Anschlag 141 gemäß der Darstellung in Fig. 11 oder mit einem Anschlag 143 gemäß der Darstellung in Fig. 14 zusammen. Dafür ist der Exzenterhebel 142 in dem Gehäuse 132 um einen Stift 144 schwenkbar.

Der Anschlag 141 an dem Gehäuse und der Exzenterhebel 142 sind so ausgebildet, dass, wenn beide in gegenseitiger Anlage sind, die Öffnung 133 des Gehäuses 132 und die Öffnung 135 des Schiebers 134 in Deckung sind, wie es in Fig. 11 zu erkennen ist. Weiter sind der Anschlag 143 an dem Gehäuse 132 und der Exzenterhebel 142 so ausgebildet, dass bei gegenseitiger Anlage derselben, die Öffnung 133 des Gehäuses 132 und die Öffnung 135 des Schiebers 134 gegeneinander versetzt sind, wie es in den Fig. 8 und 14 zu erkennen ist. Mittel zum Befestigen des Gehäuses 132 an dem Ausstattungsteil 152 sind in dem dargestellten Ausführungsbeispiel zwei Bohrungen 145a, 145b und zwei Senkkopfschrauben 146a, 146b. Wenn der Haltebolzen 112 in die Öffnung 133 des Gehäuses eingeführt wird, wird durch das mit der Kuppe 122 versehene Ende des Haltebolzens der Schieber 135 gegen die Federvorspannung verschoben und anschließend durch die Federvorspannung in die Ringnut 125 des Haltebolzens 112 eingerastet, was nun unter Bezugnahme auf die Fig. 7 - 15 näher beschrieben wird.

Eine dort gezeigte Steckhalterung ist insgesamt mit 150 bezeichnet und stellt eine Kombination des Steckers 110 und des Halters 130 dar. Gemäß der Darstellung in Fig. 15 ist die Anordnung so getroffen, dass ein Abstand a zwischen der Ringnut 125 des Haltebolzens 112 und einer der Ringnut 125 zugewandten Unterseite der Gleitscheibe 114 des Haltebolzens oder der Unterseite eines unter der Gleitscheibe 114 auf dem Haltebolzen 112 angeordneten Ausstattungsteils (nicht dargestellt) kleiner gewählt ist als ein Abstand a' zwischen einer zugewandten Oberseite des Schiebers 134 und einer Auflagefläche 147 des Gehäuses 132, auf der die Unterseite der Gleitscheibe 114 oder des Ausstattungsteils (nicht dargestellt) zu liegen kommt, so dass im Schließzustand der Steckhalterung 150 das Dämpfungselement 116 axial etwas zusammengedrückt ist. Die Strecke, um die das Dämpfungselement 116 dabei zusammengedrückt ist, kann beispielsweise 0,4 mm betragen. Der Stecker 110 ist so zwar noch relativ zu dem Halter 130 relativ verschiebbar, steht dabei jedoch unter der Vorspannkraft des Dämpfungselements 116, so dass eine Geräuschbildung durch die durch die Steckhalterung 150 miteinander verbundenen beiden Teile 152 und 154 verhindert wird.

Fig. 7 zeigt in einer Seitenansicht ein Ausführungsbeispiel der Steckhalterung 150 nach der früheren Patentanmeldung im Verriegelungszustand, in welchem der Schieber 134 mit dem Rand 137 der Öffnung 135 in der Ringnut 125 des Haltebolzens 112 eingerastet ist. In Fig. 7 ist zu erkennen, dass der Unterbau 154 mit dem Rand einer Bohrung in einer Umfangsnut 117 des Dämpfungselements formschlüssig aufgenommen ist. Der Halter 130 ist, wie oben beschrieben, mit seinem Gehäuse 132 mittels der Senkkopfschrauben 146a, 146b auf einer Seite des Ausstattungsteils 152 befestigt. Die Art der Verriegelung zwischen dem Schieber 134 und dem Haltebolzen 112 ist in Fig. 8, die eine Schnittansicht nach der Linie VIII-VIII in Fig. 7 ist, und in Fig. 9, die eine Schnittansicht nach der Linie IX-IX in Fig. 8 ist, ohne weiteres zu erkennen.

Die Fig. 10 - 12 zeigen den Entriegelungszustand, in welchem der Haltebolzen 112 demontiert werden kann. In Fig. 10 ist dabei die Steckhalterung 150 wie in Fig. 7 dargestellt, jedoch im Entriegelungszustand. Fig. 11 ist eine Schnittansicht nach der Linie XI-XI in Fig. 10, und Fig. 12 ist eine Schnittansicht nach der Linie XII-XII in Fig. 11. In dem Verriegelungszustand ist gemäß der Darstellung in Fig. 8 der Exzenterhebel 142 nach unten geschwenkt und in Anlage an dem Anschlag 143. Hingegen ist in Fig. 11 der Exzenterhebel 142 nach oben geschwenkt und an dem Anschlag 141 in Anlage.

In den Fig. 13 - 15 ist der Ruhezustand der Steckhalterung gezeigt, in welcher der Haltebolzen 112 nicht in das Gehäuse 132 eingeführt ist, was in Fig. 13 ohne weiteres zu erkennen ist, die eine Darstellung der Steckhalterung 150 wie in Fig. 7 zeigt, jedoch im Ruhezustand. Fig. 14 ist eine Schnittansicht nach der Linie XIV-XIV in Fig. 13, und Fig. 15 ist eine Schnittansicht nach der Linie XV-XV in Fig. 14. In dem Ruhezustand ist wie in dem Verriegelungszustand der Exzenterhebel 142 an dem Anschlag 143 in Anlage, wie es in Fig. 14 zu erkennen ist.

Der Entriegelungszustand nach den Fig. 10 - 12 könnte statt mit einem Exzenterhebel wie dem Exzenterhebel 142 auch mit einer (nur in Fig. 14 und nur gestrichelt dargestellten) einfachen Handhabe 149 eingestellt werden. Die Handhabe 149 würde an dem Schieber 134 anliegen oder angeformt sein und bei Betätigung durch Fingerdruck den Schieber 134 in die in den Fig. 10 -12 gezeigte Stellung bringen.

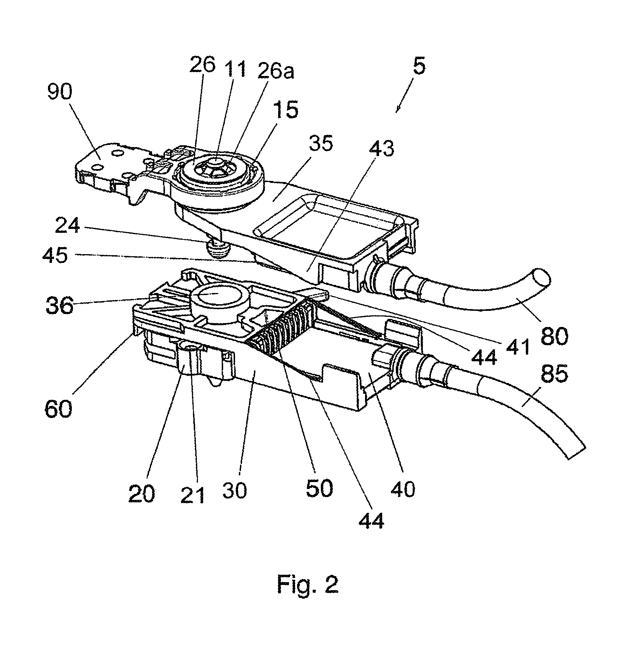

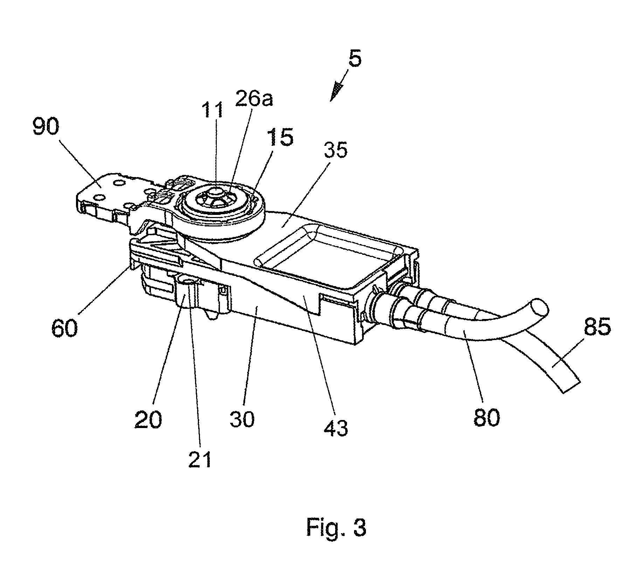

Eine Ausführungsform einer insgesamt mit 5 bezeichneten Steckhalterung nach der Erfindung ist in den Fig. 1 bis 3 in verschiedenen Ansichten gezeigt, und zwar in den Fig. 1 und 3 in einem Zustand, in welchem eine mechanische und eine elektrische Verbindung hergestellt und arretiert ist, und in Fig. 2 in einer auseinander gezogenen Darstellung in einem Zustand, in welchem die mechanische und die elektrische Verbindung getrennt sind. Die Steckhalterung 5 dient zum lösbaren Haltern eines Ausstattungsteils (nicht dargestellt) an einem Unterbau (ebenfalls nicht dargestellt). Das Ausstattungsteil kann zum Beispiel die Innenverkleidung der Kabine eines Flugzeuges oder allgemein ein Panel sein. Der Unterbau kann beispielsweise der Flugzeugrumpf sein. Ebenso könnte es sich um entsprechende Teile eines Kraftfahrzeuges handeln. Die Steckhalterung 5 besteht im Wesentlichen aus einem arretierbaren Haltebolzen 11 zum lösbaren Miteinanderverbinden eines ersten Halters 30 und eines zweiten Halters 35, die jeweils elektrische Kontakte 33 bzw. 34 tragen, zwischen denen eine elektrische Verbindung bestehen soll, wenn die Steckhalterung in dem in Fig. 1 dargestellten Schließzustand ist. Das wird im Folgenden im Einzelnen beschrieben.

Der Haltebolzen 11 hat gemäß der Darstellung in Fig. 1 an einem Ende eine Nut 24, die in dem dargestellten Ausführungsbeispiel eine Ringnut ist. Die Nut 24 weist zwei radial ausgebildete Nutseitenwände 24a, 24b auf. Die Nut 24 dient zum Arretieren des Haltebolzens 11 in einem im Folgenden noch näher beschriebenen Gehäuse 20. An seinem anderen Ende weist der Haltebolzen 11 ein elastisch nachgiebiges, scheibenförmiges Dämpfungselement 15 zur Schwingungsdämpfung und zur Montage des Haltebolzens 11 auf. Das Dämpfungselement 15 ist auf dem Haltebolzen 11 zwischen einer Haltescheibe 26 und einem axial verschiebbaren Gleitscheibenteil 27 des zweiten Halters 35 angeordnet. Die Haltescheibe 26 und der Gleitscheibenteil 27 sind auf dem Haltebolzen 11 an einem Anschlag bzw. an einer an dem Haltebolzen 11 angeformten Schulter 28 abgestützt. Den Anschlag bildet eine an dem Ende des Haltebolzens 11 ausgebildete Ringnut 29. Die Haltescheibe 26 ist ein sich auf dem Dämpfungselement 15 abstützender Blattfederring mit nach innen vorstehenden Blattfederamen 26a, die in den Fig. 2 und 3 zu erkennen sind. Die Blattfederarme erstrecken sich von dem Blattfederring aus in der Darstellung in Fig. 1 schräg nach oben und stützen sich mit ihren freien Enden in der Ringnut 29 ab.

In dem Gehäuse 20 ist ein federvorgespannter Schieber 22 gelagert, der durch Einführen des Haltebolzens 11 in eine Öffnung 37 des Gehäuses gegen die Federvorspannung verschiebbar und anschließend durch die Federvorspannung in die Nut 24 des Haltebolzens einrastbar ist. An dem Gehäuse 20 ist der erste Halter 30 angebracht. In dem dargestellten Ausführungsbeispiel ist der erste Halter 30 auf dem Gehäuse 20 angebracht, und zwar mittels einer Schiebeverbindung 60. Zu diesem Zweck hat das Gehäuse 20 auf zwei einander gegenüberliegenden Seiten einander gegenüberliegende Nuten, in welche zwei an der Unterseite des Gehäuses 20 nach unten und nach innen vorstehende Vorsprünge 61 bzw. 62 einfassen. Der erste Halter 30 erstreckt sich von dem Gehäuse 20 aus in der Darstellung in den Fig. 1 - 3 auslegerartig nach rechts. Der erste Halter 30 hat eine Bohrung 36, die mit der Öffnung 37 des Gehäuses 20 fluchtet, wenn das Gehäuse 20 in den ersten Halter 30 eingeschoben ist und sich in der in den Fig. 1 und 3 gezeigten Stellung befindet.

Der zweite Halter 35 ist, wie es in den Fig. 1 - 3 zu erkennen ist, ähnlich wie der erste Halter 30 ausgebildet, hat aber an seinem in der Darstellung in den Fig. 1 - 3 linken Ende statt eines Gehäuseaufnahmeteils den bereits erwähnten angeformten Gleitscheibenteil 27, der die herkömmliche Gleitscheibe ersetzt. An dem Gleitscheibenteil 27 ist auf der von der Schulter 28 des Haltebolzens 11 abgewandten Seite um eine den Haltebolzen 11 aufnehmende Bohrung 31 des zweiten Halters 35 eine Lagerbuchse 32 angeformt. Mit dem Gleitscheibenteil 27 und der Lagerbuchse 32 ist der zweite Halter 35 auf dem Haltebolzen 11 drehbar und axial verschiebbar gelagert. Das Dämpfungselement 15 umschließt die Lagerbuchse 32 und stützt sich auf dem Gleitscheibenteil 27 des zweiten Halters 35 ab. Der axiale Abstand zwischen der Schulter 28 und der Haltescheibe 26 ist so gewählt, dass das Dämpfungselement 15 durch die federnd ausgebildete Haltescheibe 26 elastisch nachgiebig gegen den zweiten Halter 35 gedrückt wird.

Bei der Montage wird der zweite Halter 35 mit der Lagerbuchse 32 auf den Haltebolzen 11 bis in Anlage an der Schulter 28 auf den Haltebolzen 11 aufgeschoben. Anschließend wird das Dämpfungselement 15 auf die Lagerbuchse 32 außen aufgeschoben. Schließlich wird mit der Haltescheibe 26 das Dämpfungselement 15, das vorzugsweise aus einem Gummimaterial besteht, soweit zusammengedrückt, bis die Blattfederarme 26a in die Ringnut 29 einrasten und so den zweiten Halter 35 elastisch vorgespannt auf der Schulter 28 halten.

Mit einer Verbindungshilfe 90 ist das Dämpfungselement 15 und somit der zweite Halter 35 mit einem Ausstattungsteil oder mit dem Unterbau verbindbar. Die Verbindungshilfe 90 kann beispielsweise mittels Schrauben oder Nieten befestigt werden, wofür sie Bohrungen aufweist, die in den Fig. 2 und 3 zu erkennen sind. Der erste Halter 30 ist mit Mitteln, die nicht dargestellt sind, an dem Ausstattungsteil oder dem Unterbau befestigbar. Bei den genannten Mitteln kann es sich um Schrauben oder Nieten handeln, für die das Gehäuse 20 zwei einander gegenüberliegende Durchgangsbohrungen 21 aufweist, von denen nur eine in den Fig. 2 und 3 sichtbar ist.

In Fig. 1 ist zu erkennen, dass der Haltebolzen 11 auf der von der Haltescheibe 26 abgewandten Seite von der Schulter 28 aus innerhalb der Dicke des ersten Halters 30, die dieser in dem Bereich unterhalb des Gleitscheibenteils 27 des zweiten Halters 35 aufweist, sich konisch verjüngt und in einer entsprechend konischen Bohrung 38 des ersten Halters spielfrei aufgenommen ist, spätestens sobald der Haltebolzen 11 in dem Gehäuse 20 wie dargestellt arretiert ist. Die Öffnung 37 in dem Gehäuse 20 ist vorzugsweise ein Langloch, das in Fig. 1 im Querschnitt gezeigt ist, sich also in seiner Längsausdehnung senkrecht zur Zeichenebene erstreckt. Durch einen Exzenterhebel 41 ist der Haltebolzen 11 durch Verlagern des Schiebers 22 (in der Darstellung in Fig. 1 nach rechts) entgegen der durch Federn 42, von denen nur eine in Fig. 1 sichtbar ist, ausgeübten Vorspannung entriegelbar. Bei entriegeltem Haltebolzen 11 sind der erste und der zweite Halter 30, 35 mühelos voneinander trennbar.

Die beiden Halter 30, 35 tragen in dem hier dargestellten Ausführungsbeispiel jeweils mehrere elektrische Kontakte 33 bzw. 34. Die Halter 30, 35 sind darüber hinaus jeweils so ausgebildet, dass bei in dem Gehäuse 20 arretiertem Haltebolzen 11 die Halter 30, 35 aneinander befestigt und die elektrischen Kontakte 33 des ersten Halters 30 mit den elektrischen Kontakten 34 des zweiten Halters 35 elektrisch verbunden sind. Zum Herstellen der elektrischen Verbindung zwischen den elektrischen Kontakten 33, 34 dient in dem hier beschriebenen Ausführungsbeispiel ein Verbindungskontakt 50, der an dem ersten Halter angebracht ist, wie es am besten in Fig. 2 zu erkennen ist. Die elektrischen Kontakte 33 des ersten Halters 30 sind Federkontakte, die in einem Kontaktgehäuse 40 so untergebracht sind, dass sie in Richtung zu dem Verbindungskontakt 50 aus dem Kontaktgehäuse 40 nach vorn vorstehen. Entsprechend trägt der zweite Halter 35 ein Kontaktgehäuse 45, in welchem die ebenfalls als Federkontakte ausgebildeten elektrischen Kontakte 34 so untergebracht sind, dass sie aus dem Kontaktgehäuse 45 nach vorn vorstehen. Bei diesen Federkontakten kann es sich um solche der Firma Compagnie Deutsch, 9250 Rueil-Malmaison, Frankreich, handeln. Geeignet sind Federkontakte des Typs, die von der Firma Deutsch jeweils als sliding contact connector bezeichnet und unter der Marke 3C^{®} vertrieben werden. Der entsprechende Prospekt Deutsch, Sliding Contact Connector, Automotive Connector System, A Step Ahead, wurde vor dem Prioritätstag der vorliegenden Anmeldung veröffentlicht. Ein Veröffentlichungsdatum ist der Anmelderin allerdings nicht bekannt. An ihren entgegengesetzten Enden sind die elektrischen Kontakte 33, 34 mit einem Eingangskabel 80 bzw. einem Ausgangskabel 85 verbunden. Wenn der erste und der zweite Halter 30, 35 miteinander verbunden sind, also in der in den Fig. 1 und 3 gezeigten Stellung sind, liegen die Kontaktgehäuse 40, 45 im Wesentlichen aufeinander. An der Unterseite des zweiten Halters 35 gebildete Vorsprünge 43, von denen nur einer in den Fig. 2 und 3 sichtbar ist, greifen bei geschlossener Steckhalterung 5 in zwei entsprechende Aussparungen 44 in dem ersten Halter 30 ein. Dadurch wird gewährleistet, dass die elektrischen Kontakte 33, 34 unter Federvorspannung mit dem Verbindungskontakt 50 in elektrischem Kontakt bleiben, solange sich die Steckhalterung in der in Fig. 3 gezeigten Stellung befindet. Die elektrischen Kontakte 33 oder die elektrischen Kontakte 34 können jeweils mit dem Verbindungskontakt 50 einstückig hergestellt sein. Weiter können die elektrischen Kontakte 33, 34 als Steckkontakte od. dgl. Kontakte ausgebildet sein.

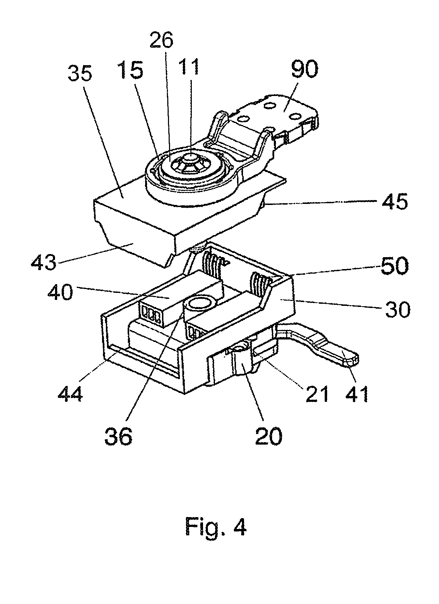

In Fig. 4 ist ein weiteres Ausführungsbeispiel der Steckhalterung nach der Erfindung in einem Zustand wie in Fig. 2 gezeigt, bei der aber die mechanisch zu verbindenden Teile und die elektrisch zu verbindenden Teile, also der erste Halter 30 und der zweite Halter 35 einerseits und das Kontaktgehäuse 40 und das Kontaktgehäuse 45 andererseits übereinander angeordnet sind. Ferner sind die Kontaktgehäuse 40, 45 aus Platzgründen jeweils in zwei Teilgehäuse aufgeteilt, wie es in Fig. 4 unten bei dem Kontaktgehäuse 40 zu erkennen ist. Entsprechend ist der Verbindungskontakt 50 zweiteilig ausgebildet, wie es ebenfalls in Fig. 4 zu erkennen ist. Zum Lösen der Steckhalterung nach Fig. 4 braucht lediglich der Exzenterhebel 41 betätigt zu werden, wie bei der ersten Ausführungsform nach den Fig. 1 bis 3.

### Bezugszeichenliste

- 5: Steckhalterung
- 11: Haltebolzen
- 15: Dämpfungselement
- 20: Gehäuse
- 21: Durchgangsbohrung
- 22: Schieber
- 24: Nut
- 24a, 24b: Nutseitenwände
- 25: Scheibe
- 26: Haltescheibe
- 26a: Blattfederarme
- 27: Gleitscheibenteil
- 28: Schulter
- 29: Ringnut (Anschlag)
- 30: erster Halter
- 31: Bohrung
- 32: Lagerbuchse
- 33: elektrischer Kontakt
- 34: elektrischer Kontakt
- 35: zweiter Halter
- 36: Bohrung
- 37: Öffnung
- 38: konische Bohrung
- 40: Kontaktgehäuse
- 41: Exzenterhebel
- 42: Feder
- 43: Vorsprung
- 44: Aussparung
- 45: Kontaktgehäuse
- 50: Verbindungskontakt
- 60: Schiebeverbindung
- 61: Vorsprung
- 62: Vorsprung
- 80: Eingangskabel
- 85: Ausgangskabel
- 90: Verbindungshilfe
- 110: Stecker
- 112: Haltebolzen
- 114: Gleitscheibe
- 116: Dämpfungselement
- 117: Umfangsnut
- 118: Haltescheibe
- 120: Federring
- 121: Schaftabschnitt
- 122: Kuppe
- 123: Schulter
- 124: Nutseitenwand
- 125: Ringnut
- 126: Nutseitenwand
- 127: Schaftabschnitt
- 128: Nut
- 130: Halter
- 132: Gehäuse
- 133: Öffnung
- 134: Schieber
- 135: Öffnung
- 137: Rand
- 138: Ausnehmung
- 139a, b: Schultern
- 140a, b: Schraubendruckfedern
- 141: Anschlag
- 142: Exzenterhebel
- 143: Anschlag
- 144: Stift
- 145a, b: Bohrungen
- 146a, b: Senkkopfschrauben
- 147: Auflagefläche
- 149: Handhabe
- 150: Steckhalterung
- 152: Ausstattungsteil
- 154: Unterbau

## Patentansprüche

1. Steckhalterung (5) zum lösbaren Haltern eines Ausstattungsteils wie einem Panel oder einer Innenverkleidung an einem Unterbau wie einem Flugzeugrumpf,
mit einem Haltebolzen (11), der an einem Ende eine Nut (24) zum Arretieren des Haltebolzens (11) und am anderen Ende ein elastisch nachgiebiges, scheibenförmiges Dämpfungselement (15) zur Schwingungsdämpfung und zur Montage des Haltebolzens (11) aufweist, das auf dem Haltebolzen (11) zwischen einer Haltescheibe (26) und einer axial verschiebbaren Gleitscheibe angeordnet ist, **dadurch gekennzeichnet, dass** die Steckhalterung (5) mit einem Gehäuse (20) versehen ist, in welchem ein federvorgespannter Schieber (22) gelagert ist, der durch Einführen des Haltebolzens (11) in eine Öffnung (37) des Gehäuses (20) gegen die Federvorspannung verschiebbar und anschließend durch die Federvorspannung in die Nut (24) des Haltebolzens (11) einrastbar ist,
wobei von dem Dämpfungselement (15) und dem Gehäuse (20) eines an dem Ausstattungsteil und das andere an dem Unterbau montierbar ist, wobei
an dem Gehäuse (20) ein erster Halter (30) angebracht ist und
die Gleitscheibe als ein Teil (27) eines zweiten Halters (35) ausgebildet ist,
wobei die Halter (30, 35) jeweils mindestens einen elektrischen Kontakt (33, 34) tragen und so ausgebildet sind, dass bei in dem Gehäuse (20) arretiertem Haltebolzen (11) die Halter (30, 35) aneinander befestigt und die elektrischen Kontakte (33, 34) elektrisch verbunden sind.

2. Steckhalterung nach Anspruch 1, **dadurch gekennzeichnet, dass** zum Herstellen der elektrischen Verbindung zwischen den elektrischen Kontakten (33, 34) wenigstens einer der Halter (30, 35) mindestens einen Verbindungskontakt (50) trägt.

3. Steckhalterung nach Anspruch 1 oder 2, **dadurch gekennzeichnet, dass** die elektrischen Kontakte (33, 34) an jedem Halter (30, 35) in einem Kontaktgehäuse (40, 45) aufgenommen und mit einem Eingangs- oder Ausgangskabel (80 oder 85) verbunden sind.

4. Steckhalterung nach Anspruch 2, **dadurch gekennzeichnet, dass** einer der beiden elektrischen Kontakte (33, 34) und der Verbindungskontakt (50) einstückig hergestellt sind.

5. Steckhalterung nach einem der vorhergehenden Ansprüche, **dadurch gekennzeichnet, dass** die Nut (24) des Haltebolzens (11) zwei radial ausgebildete Nutseitenwände (24a, 24b) aufweist.

6. Steckhalterung nach einem der vorhergehenden Ansprüche, **dadurch gekennzeichnet, dass** der erste Halter (30) mittels einer Schiebeverbindung (60) auf dem Gehäuse (20) angebracht ist.

7. Steckhalterung nach Anspruch 6, **dadurch gekennzeichnet, dass** der erste Halter (30) eine Bohrung (36) hat, die mit der Öffnung (37) des Gehäuses (20) fluchtet.

8. Steckhalterung nach Anspruch 7, **dadurch gekennzeichnet, dass** die Haltescheibe (26) des zweiten Halters (35) auf dem Haltebolzen (11) an einem Anschlag (29) abstützbar oder abgestützt ist und dass der Gleitscheibenteil (27) des zweiten Halters (35) auf dem Haltebolzen (11) an einer an dem Haltebolzen (11) angeformten Schulter (28) abstützbar oder abgestützt ist.

9. Steckhalterung nach Anspruch 8, **dadurch gekennzeichnet, dass** die Haltescheibe (26) ein sich auf dem Dämpfungselement (15) abstützender Blattfederring mit nach innen vorstehenden Blattfederarmen (26a) ist und dass der Anschlag (29) eine Ringnut ist, in der sich die Blattfederarme (26a) mit ihren freien Enden abstützen.

10. Steckhalterung nach Anspruch 8 oder 9, **dadurch gekennzeichnet, dass** der Gleitscheibenteil (27) an dem zweiten Halter (35) angeformt ist.

11. Steckhalterung nach einem der Ansprüche 8 bis 10, **dadurch gekennzeichnet, dass** an dem Gleitscheibenteil (27) des zweiten Halters (35) auf der von der Schulter (28) abgewandten Seite um eine den Haltebolzen (11) aufnehmende Bohrung (31) eine Lagerbuchse (32) angeformt ist, mit der der zweite Halter (35) auf dem Haltebolzen (11) axial verschiebbar gelagert ist und um die sich das Dämpfungselement (15) auf dem zweiten Halter (35) abstützt.

12. Steckhalterung nach einem der Ansprüche 8 bis 11, **dadurch gekennzeichnet, dass** der axiale Abstand zwischen der Schulter (28) und der Haltescheibe (26) so gewählt ist, dass das Dämpfungselement (15) durch die Haltescheibe (26) gegen den zweiten Halter (35) gedrückt ist.

13. Steckhalterung nach einem der Ansprüche 8 bis 12, **dadurch gekennzeichnet, dass** sich der Haltebolzen (11) auf der von der Haltescheibe (26) abgewandten Seite von der Schulter (28) aus innerhalb der Dicke des ersten Halters (30) konisch verjüngt und in einer entsprechend konischen Bohrung (38) des ersten Halters (30) spielfrei aufnehmbar oder aufgenommen ist.

14. Steckhalterung nach einem der vorhergehenden Ansprüche, **dadurch gekennzeichnet, dass** die Öffnung (37) in dem Gehäuse (20) eine Bohrung oder ein Langloch ist.

15. Steckhalterung nach einem der vorhergehenden Ansprüche, **gekennzeichnet durch** einen Exzenterhebel (41) zum Entriegeln des Haltebolzens (11) **durch** Verlagern des Schiebers (22) entgegen der Federvorspannung.

16. Steckhalterung nach einem der vorhergehenden Ansprüche, **gekennzeichnet durch** Mittel (21) zum Befestigen des Gehäuses (20) an dem Ausstattungsteil oder Unterbau.

17. Steckhalterung nach einem der vorhergehenden Ansprüche, **gekennzeichnet durch** eine an dem Dämpfungselement (15) angebrachte Verbindungshilfe (90) zum Befestigen des zweiten Halters (35) an dem Ausstattungsteil oder Unterbau.

18. Steckhalterung nach einem der vorhergehenden Ansprüche, **dadurch gekennzeichnet, dass** die elektrischen Kontakte (33, 34) als Federkontakte, Steckkontakte od. dgl. Kontakte ausgebildet sind.

## Claims

1. A plug-type retaining means (5) for releasably retaining a trim component, such as a panel or an interior panelling on a substructure, such as an aircraft fuselage,
with a retaining stud (11) which at one end has a groove (24) for locating the retaining stud (11) and at the other end has an elastically resilient, disc-shaped damping element (15) for vibration damping and for installing the retaining stud (11), which damping element is arranged on the retaining stud (11) between a retaining washer (26) and an axially displaceable sliding washer, **characterised in that** the plug-type retaining means (5) is provided with a housing (20), in which is mounted a spring-loaded slide (22) which by insertion of the retaining stud (11) into an opening (37) of the housing (20) is displaceable against the spring pretensioning and, subsequently, can be engaged as a result of the spring pretensioning in the groove (24) of the retaining stud (11),
wherein of the damping element (15) and the housing (2) one can be installed on the trim component and the other on the substructure, wherein a first fastener (30) is mounted on the housing (20) and the sliding washer is in the form of one part (27) of a second fastener (35),
wherein the fasteners (30,35) each have at least one electrical contact (33,34) and designed so that with the retaining stud (11) located in the housing (20) the fasteners (30,35) are secured to one another and the electrical contacts (33,34) are electrically connected.

2. A plug-type retaining means according to Claim 1, **characterised in that** to establish the electrical connection between the electrical contacts (33,34) at least one of the fasteners (30,35) has a connecting contact (50).

3. A plug-type retaining means according to Claim 1 or 2, **characterised in that** the electrical contacts (33,34) on each fastener (30,35) are accommodated in a contact housing (40,45) and are connected to an input cable or output cable (80 or 85).

4. A plug-type retaining means according to Claim 2, **characterised in that** one of the two electrical contacts (33,34) and the connecting contact (50) are made in one piece.

5. A plug-type retaining means according to any one of the preceding Claims, **characterised in that** the groove (24) of the retaining stud (11) has two radially formed groove side walls (24a,24b).

6. A plug-type retaining means according to any one of the preceding Claims, **characterised in that** the first fastener (30) is mounted on the housing (20) by means of a slide connection (60).

7. A plug-type retaining means according to Claim 6, **characterised in that** the first fastener (30) has a bore (36) which is aligned with the opening (37) of the housing (20).

8. A plug-type retaining means according to Claim 7, **characterised in that** the retaining washer (26) of the second fastener (35) can be supported or is supported on the retaining stud (11) against an abutment (29), and **in that** the sliding washer part (27) of the second fastener (35) can be supported or is supported on the retaining stud (11) against a shoulder (28) formed on the retaining stud (11).

9. A plug-type retaining means according to Claim 8, **characterised in that** the retaining washer (26) is a leaf-spring ring bearing on the damping element (15) and with inwardly projecting leaf-spring arms (26a), and **in that** the abutment (29) is an annular groove in which the leaf-spring arms (26a) are supported with their free ends.

10. A plug-type retaining means according to Claim 8 or 9, **characterised in that** the sliding washer part (27) is formed on the second fastener (35).

11. A plug-type retaining means according to any one of Claims 8 to 10, **characterised in that** a bearing bush (32) is formed on the sliding washer part (27) of the second fastener (35) on the side remote from the shoulder (28) around a bore (31) accommodating the retaining stud (11), with which bearing bush the second fastener (35) is mounted axially displaceably on the retaining stud (11) and around which the damping element (15) is supported on the second fastener (35).

12. A plug-type retaining means according to any one of Claims 8 to 11, **characterised in that** the axial spacing between the shoulder (28) and the retaining washer (26) is chosen so that the damping element (15) is pressed by the retaining washer (26) against the second fastener (35).

13. A plug-type retaining means according to any one of Claims 8 to 12, **characterised in that** on the side remote from the retaining washer (26) the retaining stud (11) tapers conically from the shoulder (28) within the thickness of the first fastener (30) and can be accommodated or is accommodated without play in a corresponding conical bore (38) of the first fastener (30).

14. A plug-type retaining means according to any one of the preceding Claims, **characterised in that** the opening (37) in the housing (20) is a bore or a slot.

15. A plug-type retaining means according to any one of the preceding Claims, **characterised by** an eccentric lever (41) for releasing the retaining stud (11) by displacing the slide (22) counter to the spring pretensioning.

16. A plug-type retaining means according to any one of the preceding Claims, **characterised by** means (21) for fastening the housing (20) to the trim component or substructure.

17. A plug-type retaining means according to any one of the preceding Claims, **characterised by** a connection aid (90) mounted on the damping element (15) for fastening the second fastener (35) to the trim component or substructure.

18. A plug-type retaining means according to any one of the preceding Claims, **characterised in that** the electrical contacts (33,34) are in the form of spring contacts, plug contacts or like contacts.

## Revendications

1. Fixation par enfichage (5) pour fixer de manière amovible une pièce d'équipement telle qu'un panneau ou un habillage intérieur à une infrastructure telle qu'un fuselage d'avion, comprenant :
- un goujon de fixation (11) dont une extrémité comporte une rainure (24) pour retenir le goujon (11) et dont l'autre extrémité comporte un élément d'amortissement (15) en forme de rondelle, souple élastique, pour amortir les vibrations et pour le montage du goujon de fixation (11), cet élément étant monté sur le goujon de fixation (11) entre une rondelle de retenue (26) et une rondelle de glissement coulissant axialement,
fixation (5) **caractérisée en ce qu'**elle
- comporte un boîtier (20) recevant un coulisseau (22) précontraint par ressort, qui coulisse dans un orifice (37) du boîtier (20) contre la tension du ressort par l'introduction du goujon de fixation (11) et qui ensuite, sous l'effet de la tension du ressort, s'accroche dans la rainure (24) du goujon de fixation (11),
- l'élément d'amortissement (15) ou le boîtier (20) étant installé l'un sur la pièce d'équipement et l'autre sur l'infrastructure,
- le boîtier (20) portant un premier support (30), et
- la rondelle de glissement forme une partie (27) d'un second support (35),
- les supports (30, 35) portant chacun au moins un contact électrique (33, 34) et ils sont réalisés pour qu'au niveau du goujon de fixation (11) bloqué dans le boîtier (20), les supports (30, 35) sont fixés l'un à l'autre et que les contacts électriques (33, 34) sont reliés électriquement.

2. Fixation par enfichage selon la revendication 1,
**caractérisée en ce que**
pour réaliser la liaison électrique entre les contacts électriques (33, 34), au moins l'un des supports (30, 35) porte au moins un contact de liaison (50).

3. Fixation par enfichage selon la revendication 1 ou 2,
**caractérisée en ce que**
les contacts électriques (33, 34) de chaque support (30, 35) sont logés dans un boîtier de contact (40, 45) et sont reliés à un câble d'entrée ou un câble de sortie (80 ou 85).

4. Fixation par enfichage selon la revendication 2,
**caractérisée en ce que**
l'un des deux contacts électriques (33, 34) et le contact de liaison (50) sont réalisés en une seule pièce.

5. Fixation par enfichage selon l'une des revendications précédentes,
**caractérisée en ce que**
la rainure (24) du goujon de fixation (11) comporte deux parois latérales de rainure (24a, 24b) de forme radiale.

6. Fixation par enfichage selon l'une des revendications précédentes,
**caractérisée en ce que**
le premier support (30) est monté sur le boîtier (20) par l'intermédiaire d'une liaison coulissante (60).

7. Fixation par enfichage selon la revendication 6,
**caractérisée en ce que**
le premier support (30) comporte un perçage (36) aligné sur l'ouverture (37) du boîtier (20).

8. Fixation par enfichage selon la revendication 7,
**caractérisée en ce que**
la rondelle de fixation (26) du second support (35) s'appuie ou est appuyée contre une butée (29) du goujon de fixation (11), et
la partie de rondelle de coulissement (27) du second support (35), est appuyée sur le goujon de fixation (11), contre un épaulement (28) du goujon de fixation (11).

9. Fixation par enfichage selon la revendication 8,
**caractérisée en ce que**
la rondelle de fixation (26) est une bague en forme de ressort-lame s'appuyant contre l'élément d'amortissement (15) avec les bras des ressorts-lames (26a) venant en saillie vers l'intérieur, et
la butée (29) est une rainure annulaire dans laquelle s'appuient les extrémités libres des bras des ressorts-lames (26a).

10. Fixation par enfichage selon la revendication 8 ou 9,
**caractérisée en ce que**
la partie de rondelle de coulissement (27) est formée sur le second support (35).

11. Fixation par enfichage selon l'une des revendications 8 à 10,
**caractérisée en ce que**
la partie de rondelle coulissante (27) du second support (35), comporte une douille de palier (32) sur le côté opposé à l'épaulement (28) autour du perçage (31) recevant le goujon de fixation (11), le second support (35) coulissant axialement par la douille sur le goujon de fixation (11) et l'élément d'amortissement (15) s'appuyant sur le second support (35) autour de la douille.

12. Fixation par enfichage selon l'une des revendications 8 à 11,
**caractérisée en ce que**
le glissement axial entre l'épaulement (28) et la rondelle de fixation (26) est choisi pour que l'élément d'amortissement (15) soit poussé par la rondelle de fixation (26) contre le second support (35).

13. Fixation par enfichage selon l'une des revendications 8 à 12,
**caractérisée en ce que**
le goujon de fixation (11) va en diminuant à partir du côté de l'épaulement (28) opposé à la rondelle de fixation (26), en traversant l'épaisseur du premier support (30) en diminuant suivant une forme conique pour venir dans un perçage conique (38) correspondant du premier support (30) en étant reçu sans jeu.

14. Fixation par enfichage selon l'une des revendications précédentes,
**caractérisée en ce que**
l'orifice (37) du boîtier (20) est un perçage ou un trou oblong.

15. Fixation par enfichage selon l'une des revendications précédentes,
**caractérisée par**
un levier excentré (41) pour déverrouiller le goujon de fixation (11) par déplacement du coulisseau (22) contre la tension exercée par le ressort.

16. Fixation par enfichage selon l'une des revendications précédentes,
**caractérisée par**
des moyens (21) pour fixer le boîtier (20) sur la pièce d'équipement ou l'infrastructure.

17. Fixation par enfichage selon l'une des revendications précédentes,
**caractérisée par**
un élément de liaison (90) prévu sur l'élément d'amortissement (15) pour fixer le second support (35) à la pièce d'équipement ou à l'infrastructure.

18. Fixation par enfichage selon l'une des revendications précédentes,
**caractérisée en ce que**
les contacts électriques (33, 34) sont des contacts à ressort, des contacts par enfichage ou des contacts analogues.
